**Europäisches Patentamt**

**European Patent Office**

**Office européen des brevets**

(19)

(11) Veröffentlichungsnummer: **0 243 515**

**A1**

# (12) EUROPÄISCHE PATENTANMELDUNG

(21) Anmeldenummer: **86105804.8**

(22) Anmeldetag: **26.04.86**

(51) Int. Cl.4: **G01F 1/66**

(43) Veröffentlichungstag der Anmeldung:
**04.11.87 Patentblatt 87/45**

(84) Benannte Vertragsstaaten:
**DE**

(71) Anmelder: **MMT-Medizin Messtechnik U. Spiegelhauer KG**
**Weg zum Badeteich 43**
**D-2110 Buchholz 5(DE)**

(72) Erfinder: **Güggenbühl, Walter, Prof.**
**Glärnisch-Strasse 40**
**CH-8012 Stäfa(CH)**
Erfinder: **Buess, Christian**
**Kraftstrasse 25**
**CH-8044 Zürich(CH)**

(74) Vertreter: **Schupfner, Gerhard D. et al**
**Müller, Schupfner & Gauger Karlstrasse 5**
**Postfach 14 27**
**D-2110 Buchholz/Nordheide(DE)**

(54) **Einrichtung zur Messung der Strömungsgeschwindigkeit von Gasen oder Gasgemischen in einem freien Rohrquerschnitt.**

(57) Die vorliegende Erfindung bezweckt, in einem freien Rohrquerschnitt die Strömungsgeschwindigkeit eines Gases oder Gasgemischs zu messen. Das Gerät besitzt ein geringes Totvolumen, einen vernachlässigbaren Strömungswiderstand, einen weiten linearen Arbeitsbereich und einen gegenüber sonstigen Geräten stark erweiterten Frequenzbereich.

Erfindungsgemäss ist das Gerät dadurch gekennzeichnet, dass die Strömungsgeschwindigkeit aus den Laufzeiten von Schall-beziehungsweise Ultraschallimpulsen, welche mit und gegen das strömende Medium wandern, bestimmt wird. Durch eine zusätzliche Messung der Gastemperatur kann gleichzeitig die mittlere Molmasse des Gasgemischs im Kanal bestimmt werden.

# Einrichtung zur Messung der Strömungsgeschwindigkeit von Gasen oder Gasgemischen in einem freien Rohrquerschnitt.

Bisherige Geräte zur Bestimmung der Flussgeschwindigkeit von Gasen benützen als Messgrösse beispielsweise den an einem Strömungswiderstand entstehenden Differentialdruck. Geräte dieser Bauart zeigen aber diverse Nachteile: Erstens einen eingeschränkten linearen Messbereich, zweitens einen störenden Strömungswiderstand, der vor allem in medizinischen Anwendungen als negativ empfunden wird und zudem durch kondensierenden Wasserdampf in seinen geometrischen Abmessungen verändert wird und dadurch falsche Messergebnisse liefert, drittens besitzen Geräte zur Messung hoher Flussgeschwindigkeiten ein für medizinische Anwendungen zu grosses Totvolumen, viertens zeigen fast alle Geräte dieser Art bei höherfrequenter Anregung ein starkes Resonanzverhalten. Eine andere Messmethode verwendet die Widerstandsänderungen von Thermistoren als Grösse für die Flussgeschwindigkeit. Auch Geräte dieser Art zeigen verschiedene Nachteile: Erstens ist eine Detektion der Strömungsrichtung im allgemeinen nicht möglich, zweitens entsteht eine starke Störung der Strömung, da die Thermistoren im Zentrum des Querschnitts angebracht werden, drittens wird aufgrund einer punktuellen Messung auf die mittlere Strömungsgeschwindigkeit geschlossen.

Die vorliegende Erfindung bezweckt, in einem freien Rohrquerschnitt, also ohne jegliche Störung der Strömungsgeometrie, die Strömungsgeschwindigkeit, Temperatur und Molmasse eines Gasgemisches im Messkanal zu registrieren. Das Gerät besitzt ein geringes Totvolumen, einen vernachlässigbaren Strömungswiderstand, einen weiten linearen Arbeitsbereich und einen gegenüber sonstigen Geräten stark erweiterten Frequenzbereich.

Erfindungsgemäss ist das Gerät dadurch gekennzeichnet, dass die gesuchten Grössen aus einer Messung der Gastemperatur und den Laufzeiten von Schallimpulsen, welche mit, beziehungsweise gegen das strömende Medium wandern, bestimmt werden.

Ein Ausführungsbeispiel des Erfindungsgegenstandes wird nachstehend anhand der Zeichnungen erläutert. Es zeigen:

Fig. 1 einen schematischen Querschnitt durch das Messinstrument,

Fig. 2 einen schematischen Aufbau des gesamten Gerätes,

Fig. 3 einen Teil der Sende-und Empfangsschaltung.

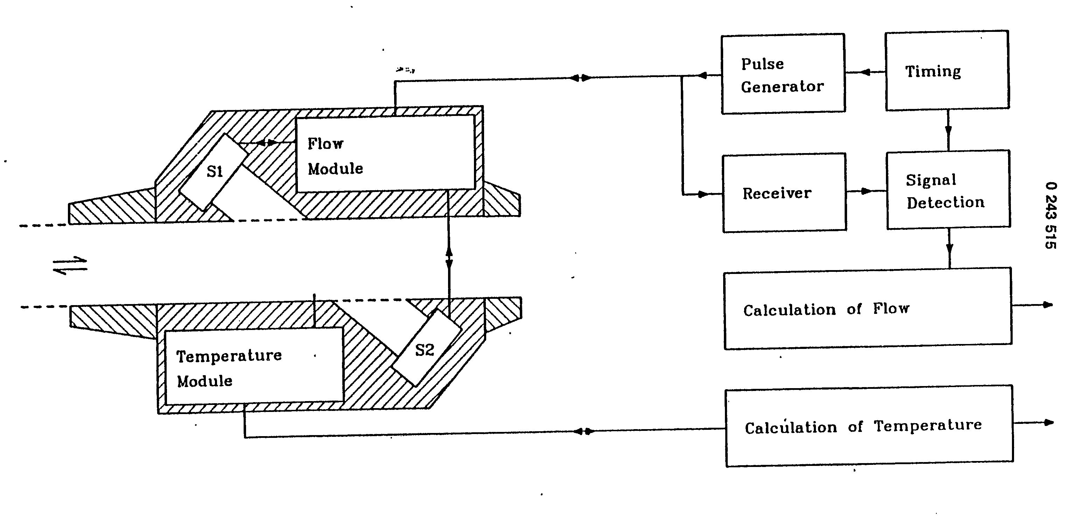

Das in Fig. 1 in einem schematischen Querschnitt dargestellte Gerät, im folgenden auch als Messkopf bezeichnet, enthält in den Kammern 1 und 2 die zur Messung notwendigen Sende-und Empfangselemente S1 und S2. Dabei handelt es sich beispielsweise um Kondensatormikrophone, welche sich sowohl für den Sende-als auch für den Empfangsbetrieb eignen. Die schräg zum durchströmten Messkanal 5 angebrachten Zellen S1 und S2 senden den Schall über die Abstrahlöffnungen 3 und 4 zur gegenüberliegenden Zelle. Elektrisch isolierende seitliche Führungselemente 13 und die zum Messkanal gewandten Diffusoren 12 positionieren die Zellen fest in den Kammern 1 und 2. Von diesen Kammern führt je eine Verbindungsbohrung zur oberen Kammer 7, in welcher eine elektronische Schaltung untergebracht ist, die als Sende/Empfangsweiche dient und die empfangenen Signale verstärkt. An einer Seitenwand der Kammer 7 sind zwei in der Schnittzeichnung nicht sichtbare mehrpolige Buchsen angebracht, über welche der Messkopf mit der Kontrolleinheit verbunden ist. Vor der oberen Kammer führen Verbindungsbohrungen zur unteren Kammer 6. Diese zweite, etwa gleichgrosse Kammer enthält die zur Temperaturmessung notwendigen elektronischen Schaltungen. Die beiden elektronischen Schaltungsgruppen sind aus Gründen der gegenseitigen Beeinflussung voneinander getrennt untergebracht. Die Temperaturmessung wird mit einem Thermoelement 11 vorgenommen, welches über eine Schraube mit eingepresstem Kunststoffmittelteil in den Messkanal 5 eingeführt wird. Die Halterung des Thermoelementes muss einerseits ein Auswechseln desselben ermöglichen, andererseits aber auch dicht sein, damit das Eindringen von Flüssigkeiten oder sonstigen Verunreinigungen in der Kammer 6 verhindert wird. Die Versorgung und die Signalrückführung zur Kontrolleinheit geschieht über Kammer 7 und die dort in der Seitenwand vorhandenen Buchsen. Heizungselemente, welche den Messkopf auf eine gegenüber der Umgebung erhöhte Temperatur bringen, können direkt in den Kammern 6 und 7 oder in von diesen Kammern wegführenden Bohrungen untergebracht werden. Ein geringfügiges Heizen des Messkopfes hat den Vorteil, dass die Kondensation von Wasserdampf auf den Oberflächen des Messkanals 5 vermieden werden kann. In medizinischen Anwendungen wird wegen der hohen Luftfeuchtigkeit der ausgeatmeten Luft ein Heizen des Messkopfes in den meisten Fällen unumgänglich sein.

Der Messkanal 5 weist über die gesamte Länge einen gleichbleibenden kreisförmigen Querschnitt auf. Die grossen Abstrahlöffnungen 3 und 4 sind mit Diffusoren 14 versehen, so dass auch in diesen Bereichen der kreisförmige Querschnitt des Messkanals erhalten bleibt. Diese Diffusoren bestehen beispeilsweise aus feinmaschigen, wasserabstossenden Kunststoffnetzen. Zur Unterdrückung störender Schallreflexionen dient einerseits die - schallabsorbierende Oberfläche 15 des Messkanals, andererseits die an den Kanalenden angebrachten Dämpfungselemente 10, welche beispielsweise aus einem weichen Kunststoff bestehen. Für den Messkanal stehen zwei verschiedene, auswechselbare Abschlussstücke zur Verfügung: die kurze Version 8 dient zur Erzielung eines möglichst kleinen Totvolumens, die längere Version 9 ist so gestaltet, dass ein für medizinische Anwendungen geeignetes Mundstück eingeschoben werden kann.

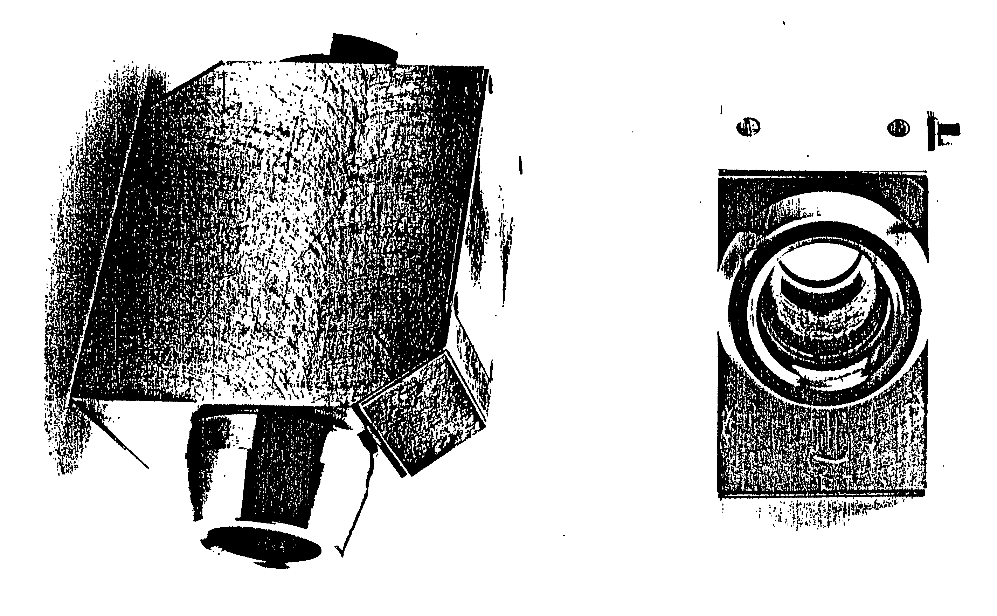

Eine Ausführungsvariante der im Kammer 7 untergebrachten elektronischen Schaltung zur Ansteuerung einer der kombinierten Sende/Empfangszellen ist in Fig. 3 dargestellt. Als passives Element zur Umschaltung zwischen Sende-und Empfangsphase dient eine Anordnung aus 4 Dioden: Sendesignale S mit einer Amplitude, welche sehr viel grösser als die doppelte Flussspannung der Dioden ist, gelangen direkt auf das mit einer Polarisierungsspannung Vp vorgespannte Kondensatormikrophon Z. Da die Empfangssignale sehr viel kleiner als eine Diodenflussspannung sind, entkoppeln die Dioden während der der Sendephase folgenden Empfangsphase Sende-umd Empfangsteil. Die empfangenen Signale gelangen somit direkt über eine Impedanz (R2 parallel zu C) an einen Verstärker A mit hohem Eingangswiderstand, beispielsweise realisiert durch einen Operationsverstärker. Die Clampdioden D5 und D6, welche das Eingangssignal auf V + beziehungsweise V-begrenzen, verhindern während der Sendephase eine Uebersteuerung des Verstärkers.

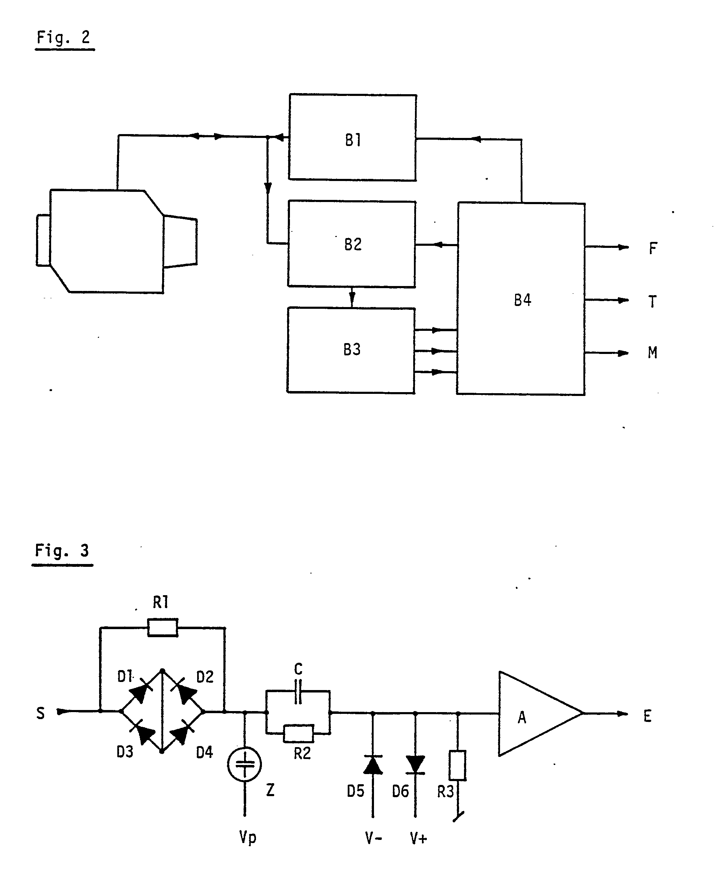

Die Funktionsweise des dargestellten Gerätes wird anhand der Figur 2 erläutert. Zu Beginn eines Messzyklus regt die Verarbeitungs-und Steuereinheit B4 die Sendesignalerzeugung B1 an; die Zellen S1 und S2 strahlen daraufhin gleichzeitig einen kurzen Ultraschallimpuls aus. Die beiden Impulse wandern nun gegeneinander durch den Messkanal und gelangen zur gegenüberliegenden Zelle. Da die Sendesignalerzeugung B1 sich jetzt in der Ruhephase befindet, können die ankommenden Impulse empfangen und verstärkt werden. Sofern der Messkanal von einem strömenden Gas durchflossen wird, sind die beiden Laufzeiten der Schallimpulse verschieden: bei gleichgerichteter Schallausbreitungs-und Strömungsrichtung verkürzt sich die Laufzeit, bei entgegengesetzter Richtung verlängert sie sich. Die verstärkten Empfangssignale, wie auch die Signale der Temperatursonde,gelangen nun vom Messkopf zur Kontrolleinheit. Dort werden sie in einer Vorverarbeitungseinheit B2 aufbereitet und den Signaldetektionsschaltungen B3 zugeführt. Diese bestimmen mittels auf bekannte Weise kaskadierter elektronischer Zähler die Laufzeit der Schallimpulse und werten das Signal der Temperatursonde aus. Mit diesen beiden Schallaufzeiten und dem aktuellen Wert der Temperatur berechnet die Verarbeitungs-und Steuereinheit B4, beispielsweise realisiert durch eine Schaltung mit einem Mikroprozessor, die Grössen für Flussgeschwindigkeit F, Temperatur T und Molmasse M. Bei der Berechnung gelangen die in den Patentansprüchen 5 und 6 erwähnten Formeln zur Anwendung. Falls neben diesen Grössen auch das verschobene Gasvolumen von Interesse ist, kann mittels analoger oder digitaler Integration der Flussgeschwindigkeit auch diese weitere Grösse bestimmt werden. Ein vollständiger Messzyklus besteht somit aus drei Phasen: Senden der Schallimpulse, Empfangen derselben nach erfolgter Durchquerung des Messkanals, Verarbeiten der anfallenden Daten. Im beschriebenen Gerät dauert ein solcher Messzyklus etwa 1 bis 2 ms.

## Ansprüche

1. Einrichtung zur Messung der Strömungsgeschwindigkeit von Gasen oder Gasgemischen in einem freien Rohrquerschnitt eines als Messkopf bezeichneten Instruments mittels Schall-beziehungsweise Ultraschallwellen, dadurch gekennzeichnet, dass ein Sende/Empfangszellenpaar als Messstrecke schräg zur Rohrachse angeordnet und mit Diffusoren zur homogeneren Schallabstrahlung ausgerüstet ist, beide Elemente ein gleiches, gepulstes Schallsignal abstrahlen, wobei ein Signal in Richtung, das andere entgegen der zu messenden Gasströmung wandert, beide Zellen nachfolgend auf Empfang umgeschaltet werden und die Laufzeiten der Schallimpulse über die Messstrecke zur rechnerischen Bestimmung, mittels nachgeschalteter elektronischer Schaltungen, der Strömungsgeschwindigkeit und davon abgeleiteten Grössen verwendet werden.

2. Einrichtung nach Anspruch 1, dadurch gekennzeichnet, dass die beiden entgegengesetzt wandernden Schallimpulse gleichzeitig von den beiden Sende/Empfangszellen (S1, S2) abgestrahlt werden.

3. Einrichtung nach Anspruch 2 oder 1, dadurch gekennzeichnet, dass der Messkopf zusätzliche Einrichtungen zur Unterbringung von elektronischen Schaltungen enthält.

4. Einrichtung nach einem oder mehreren der vorherigen Ansprüche, dadurch gekennzeichnet, dass im Messkopf eine Sonde zur Messung der Gastemperatur im Messkanal integriert ist.

5. Einrichtung nach einem oder mehreren der vorherigen Ansprüche, dadurch gekennzeichnet, dass die Flussgeschwindigkeit aus der Formel $v = k1^*(t1-t2) + k2^*(t1-t2)^*(t1+t2)$, und weiteren empirisch gefundenen Korrekturen, bestimmt wird, wobei v die Strömungsgeschwindigkeit, $k1$ und $k2$ dimensionsbehaftete Konstanten sowie $t1$ und $t2$ die Laufzeiten der Schallimpulse mit bezw. gegen die Strömung darstellen.

6. Einrichtung nach einem oder mehreren der vorherigen Ansprüche, dadurch gekennzeichnet, dass zur Berechnung der mittleren Molmasse des Gasgemischs im Kanal die für ideale Gase geltende Proportionalität zwischen $t1 + t2$ und $T/M$ ausgenützt wird, wobei $t1$ und $t2$ die Laufzeiten der Schallimpulse, T die Temperatur im Messkanal und M die Molmasse des Gases darstellen.

7. Einrichtung nach einem oder mehreren der vorherigen Ansprüche, dadurch gekennzeichnet, dass neben der Strömungsgeschwindigkeit auch das verschobene Gasvolumen berechnet wird.

8. Einrichtung nach einem oder mehreren der vorherigen Ansprüche, dadurch gekennzeichnet, dass im Messkopf eine regulierte oder nichtregulierte Heizung untergebracht ist.

9. Einrichtung nach einem oder mehreren der vorherigen Ansprüche, dadurch gekennzeichnet, dass die vor den Zellen angebrachten Diffusoren zur homogeneren Schallabstrahlung auch zur Dämpfung seitlicher Schallreflektionen und gleichzeitig als Auflage für die Sende/Empfangszellen dienen.

10. Einrichtung nach einem oder mehreren der vorherigen Ansprüche, dadurch gekennzeichnet, dass die schräg in den Messkanal einlaufenden Oeffnungen zur Abstrahlung der Schallimpulse zur Vermeidung von Wirbeln mit Diffusoren verschlossen sind.

11. Einrichtung nach einem oder mehreren der vorherigen Ansprüche, dadurch gekennzeichnet, dass zur Vermeidung von störenden Schallreflexionen im Messkanal Dämpfungselemente vorhanden sind, beispielsweise eine schallabsorbierende Oberfläche des Messkanals, welche gleichzeitig zur Befestigung der Diffusoren vor den Abstrahlöffnungen dienen kann.

12. Einrichtung nach einem oder mehreren der vorherigen Ansprüche, dadurch gekennzeichnet, dass die Laufzeiten der Schallimpulse durch elektronische Zählung bestimmt werden.

13. Einrichtung nach einem oder mehreren der vorherigen Ansprüche, dadurch gekennzeichnet, dass der Sender die Sende/Empfangselemente über eine passive Sende/Empfangsweiche, beispielsweise realisiert durch ein oder mehrere Paare von antiparallel angeordneten Dioden (D1, D2, D3, D4), ansteuert, und die empfangenen Signale über eine Impedanz (C, R2) auf einen Verstärker mit einer vorgeschalteten Begrenzerschaltung (D5, D6) gelangen.

Timing

Signal Detection

Pulse Generator

Receiver

Calculation of Flow

Calculation of Temperature

Flow Module

Temperature Module

S1

S2

Fig. 2

Fig. 3

Europäisches
Patentamt

**EUROPÄISCHER RECHERCHENBERICHT**

Nummer der Anmeldung

EP 86 10 5804

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 454 101 (ONERA) <br> * Seite 1, Zeilen 10-38; Figuren * | 1-3 | G 01 F 1/66 |
| A | US-A-3 727 458 (BCURA LTD.) <br><br> * Zusammenfassung; Figuren; Spalte 1, Zeile 46 - Spalte 2, Zeile 25; Spalte 3, Zeilen 41-45 * | 1,5,6, 11 | |
| A | US-A-3 982 435 (GENERAL MOTORS CORP.) <br> * Zusammenfassung; Figuren * | 4,7 | |
| A | FR-A-2 487 508 (LANDIS & GYR ZUG AG) <br> * Seite 1, Zeilen 1-17; Seite 2, Zeile 12 - Seite 3, Zeile 25 * | 3-5,12 | |
| A | PATENTS ABSTRACTS OF JAPAN, Band 9, Nr. 195 (P-379)[1918], 13. August 1985; & JP-A-60 61 621 (TOSHIBA K.K.) 09-04-1985 <br> * Zusammenfassung * <br><br> --- -/- | 9 | |

RECHERCHIERTE SACHGEBIETE (Int. Cl.4)

G 01 F 1/66
G 01 P

Der vorliegende Recherchenbericht wurde für alle Patentansprüche erstellt.

| Recherchenort | Abschlußdatum der Recherche | Prüfer |
|---|---|---|
| DEN HAAG | 14-01-1987 | NUIJTEN E.M. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENTS ABSTRACTS OF JAPAN, Band 9, Nr. 327 (P-415)[2050], 21. Dezember 1985; & JP-A-60 151 516 (FUJI DENKI SOUGOU KENKYUSHO K.K.) 09-08-1985 * Zusammenfassung * ----- | 9,11 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 14-01-1987 | NUIJTEN E.M. |